# EUROPÄISCHE PATENTSCHRIFT

(11) **EP 2 136 449 B1**
(45) Veröffentlichungstag und Bekanntmachung des Hinweises auf die Patenterteilung: **10.02.2010**
(21) Anmeldenummer: 08011146.1
(22) Anmeldetag: 19.06.2008
(51) Int. Cl.: H02J 3/38, H02N 6/00

(54) **Solarkraftwerk**
Solar power plant
Centrale solaire

(43) Veröffentlichungstag der Anmeldung: 23.12.2009
(73) Patentinhaber: SMA Solar Technology AG, 34266 Niestetal (DE)
(72) Erfinder: Cramer, Günther, 34128 Kassel (DE); Engel, Bernd, Dr., 38302 Wolfenbüttel (DE); Greizer, Frank, 34260 Kaufungen (DE); Laschinski, Joachim, 34134 Kassel (DE)
(74) Vertreter: Walther, Walther & Hinz GbR

(56) Entgegenhaltungen:
- EP-A- 1 841 050
- DE-U1-202006 008 936
- US-A1- 2002 085 325

## Beschreibung

Die Erfindung betrifft ein Solarkraftwerk mit einer Vielzahl von Photovoltaikmodulen zur Erzeugung einer in ein mehrphasiges Energieversorgungsnetz einzuspeisenden Energie, wobei mehrere unterschiedlichen Phasen zugeordneten Photovoltaik-Strings mit einer Primärseite eines Netztransformators verbunden sind und wenigstens ein Wechselrichter zur Umwandlung der von den Photovoltaikmodulen generierten Gleichspannung in eine netzkonforme Netzwechselspannung vorhanden sowie der Netztransformator mit einem Neutralleiter und einem Erdungsanschluss oder lediglich einem Erdungsanschluss versehen ist.

Große Solaranlagen, so genannte Solarkraftwerken, bestehen aus einer Vielzahl von Solarmodulen bzw. Photovoltaikmodulen und Wechselrichtern. Die als Generatoren wirkenden Photovoltaikmodule werden in Reihe und parallel zu sogenannten Strings verschaltet. Die Wechselrichter werden so verschaltet, dass sie über einen gemeinsamen Netztransformator in das Energieversorgungsnetz einspeisen.

Es können grundsätzlich einphasige oder mehrphasige Wechselrichter eingesetzt werden. Vorwiegend werden dreiphasige Wechselrichter verwendet.

Bekannt ist es, einphasige Wechselrichter so anzuordnen, dass in jede Phase eines mehrphasigen Netz-Transformators eingespeist wird. Für jede Phase ist dann mindestens ein Wechselrichter vorhanden. Die Wechselrichter werden über Schalter, insbesondere Schütze, mit den Phasen bzw. Leitern L1, L2, L3 und damit mit der Primärseite des Transformators verbunden. Die Transformator-Wicklungen sind primärseitig in Sternschaltung verschaltet. Der Mittelpunkt ist mit dem Neutralleiter "N" verbunden. Der Neutralleiter "N" wird mit Erde (PE) verbunden. Die Wicklungen der Sekundärseite sind vorzugsweise im Dreieck verschaltet.

Wird ein mehrphasiger Wechselrichter, und zwar ein dreiphasiger Wechselrichter, verwendet, sind die Ausgänge des Wechselrichters mit den Leitern L1, L2, L3 über Schütze verbunden.

Einige Photovoltaikmodule, und zwar Dünnschicht-Module, müssen so betrieben werden, dass eine bestimmte Feldstärkenorientierung an ihren Zellen nicht auftreten kann. Andernfalls ist mit frühzeitiger Schädigung dieser Module zu rechnen, die zu einer Verringerung der Lebensdauer führen.

Eine bekannte Lösung besteht darin, einen Anschluss des Photovoltaik-Generators zu erden. Damit können die Zellen der Module ausschließlich Spannungen einer Polarität gegen Erde annehmen.

Die Erdung der Module bedingt jedoch entweder die Verwendung galvanisch trennender Wechselrichter oder transformatorloser Wechselrichter bestimmter Topologien. Beide Wechselrichtertypen müssen eine fehlende Polarität der Eingangsspannung intern generieren, um in das Netz einspeisen zu können. Das führt zu einer Verringerung des Umwandlungswirkungsgrades dieser Wechselrichter.

Eine andere Lösung dagegen ist aus der DE 20 2006 008 936 U1 bekannt. Diese besteht darin, an einem Modul-Anschluss ein bestimmtes Potential anzulegen. Vorhanden ist nämlich eine Einrichtung, durch die der negative Anschluss eines Moduls auf ein positives Potential angehoben wird. Damit soll die Lebensdauer der Module verlängert werden. Vorteilhaft bei dieser Einrichtung ist, dass Wechselrichter unterschiedlichster Topologie eingesetzt werden können.

Bei einer großen Solaranlage mit vielen Photovoltaik-Generatoren und Wechselrichtern müsste jedoch eine große Zahl solcher Einrichtungen angebracht werden, was jedoch teuer ist.

Der Erfindung liegt die Aufgabe zugrunde, ein Solarkraftwerk der genannten Art so zu verbessern, dass eine Erhöhung der Lebensdauer der Photovoltaikmodule, insbesondere bei Dünnschichtmodulen möglich ist, wobei ein hoher Umwandlungswirkungsgrad der Wechselrichter bei geringen Schaltungskosten möglich ist.

Diese Aufgabe wird nach einer Variante dadurch gelöst, dass zwischen dem Neutralleiter und Erde eine zusätzliche Gleichspannungsquelle derart eingebracht ist, dass das Potential der Photovoltaik-Strings verschoben wird und eine Vorspannung von Null Volt verschieden eingestellt ist.

Nach einer anderen Variante ist zwischen einer der Phasen und Erde eine zusätzliche Gleichspannungsquelle derart eingebracht, dass das Potential der Photovoltaik-Strings verschoben wird und eine Vorspannung von Null Volt verschieden eingestellt wird.

Die erfindungsgemäßen Lösungen haben den Vorteil, dass keine nachteilige Feldstärkeorientierung möglich ist und damit eine Schädigung der Module vermieden wird.

Der besondere Vorteil der Erfindung liegt darin, dass Photovoltaik-Generatoren eingesetzt werden können, die geerdet betrieben werden müssen. Die erfindungsgemäße Schaltungsanordnung kann außerdem in großen Anlagen, die einen eigenen Netztransformator benötigen, mit allen Wechselrichtertopologien eingesetzt werden. Daher müssen keine speziellen Wechselrichter eingesetzt werden.

Erfindungsgemäß ergibt sich eine Solaranlage mit mindestens einem Netztransformator, wobei zwischen dem Neutralleiter (N) und der Erde (PE) eine zusätzliche Gleichspannungsquelle eingebracht wird, so dass das Potential des einen Anschlusses des Photovoltaik-Strings auf ein Potential von Null Volt verschieden oder größer Null Volt eingestellt wird. Dieses Potential kann aber auch eine negative Spannung sein. Der Betrag der Spannung muss also von Null Volt verschieden sein. Die Vorspannung richtet sich in Höhe und Polarität nach dem gewünschten Potential des Photovoltaik-Strings.

Durch die Erfindung wird außerdem das Problem der Erdung gelöst, und zwar ohne dass ein galvanisch trennender Wechselrichter oder ein transformatorloser Wechselrichter einer bestimmten Schaltungstopologie verwendet werden muss.

Bei Verwendung einer dreiphasigen Wechselrichteranordnung ohne Neutralleiter-Ausführung kann die Gleichspannungsquelle zwischen einer der drei Phasen L1, L2, L3 und PE eingefügt werden.
Bei Verwendung einer dreiphasigen Wechselrichteranordnung mit Neutralleiter-Ausführung wird die Gleichspannungsquelle zwischen dem Neutralleiter und PE verschaltet. Der Mittelpunkt des Transformators ist mit einem Neutralleiter verbunden. Der Netztransformator ist auch hier ein mehrphasiger Transformator.

Die Erfindung wird durch ein Solarkraftwerk mit den technischen Merkmalen der unabhängigen Ansprüche 1 und 2 definiert.

Weitere vorteilhafte Ausgestaltungen der Erfindung sind den Unteransprüchen zu entnehmen.

In einer vorteilhaften Weiterbildung des erfindungsgemäßen Antriebes ist vorgesehen, dass eine Stromüberwachungseinrichtung der zusätzlichen Gleichspannungsquelle zur Erkennung von Erdschlüssen angeschlossen ist. Dadurch kann mit verhältnismäßig geringem schaltungstechnischen Aufwand zusätzlich ein Erdschluss bzw. eine fehlerhafte Isolation überwacht werden, und zwar weil derselbe zu PE führende Strompfad sowohl für eine Potentialanhebung als auch zur Strommessung genutzt werden kann.

Durch eine entsprechende Vorspannung des Netzmittelpunktes kann eine unipolare Vorspannung aller Photovoltaikzellen des Generators erreicht werden, auch dann, wenn sie über einen transformatorlosen Wechselrichter einspeisen. Die Verwendung hocheffizienter, transformatorloser Wechselrichter in Photovoltaik-Anlagen großer Leistung ist damit auch beim Einsatz empfindlicher Photovoltaikmodule, wie Dünnschichtmodule bzw. Modulen mit amorphen Zellen möglich. Daher ist es sehr vorteilhaft, wenn die Photovoltaikmodule als Dünnschichtmodule ausgeführt sind und jeder Wechselrichter als transformatorloser Wechselrichter ausgeführt ist.

Bei einer weiteren bevorzugten Ausgestaltung der Erfindung wird für jede Phase ein Wechselrichter eingesetzt. Günstig ist der Einsatz von mehreren einphasigen Wechselrichtern bei großer Kraftwerksleistung. Häufig weisen einphasige Wechselrichter keine galvanische Trennung auf. Die Wechselrichter sind so angeordnet, dass in jede Phase des mehrphasigen Transformators eingespeist wird. Für jede Phase ist dann mindestens ein Wechselrichter vorhanden. Diese können ohne Weiteres mit dem N- und dem PE-Leiter verbunden werden, so dass insbesondere bei Wechselrichtern ohne galvanische Trennung keine zusätzliche Modulerdung zwingend erforderlich ist, weil die Module über die Wechselrichter geerdet sind.

Wenn ein außerhalb eines Wechselrichtergehäuses vorhandener zusätzlicher Netztransformator angeschlossen ist, dann können in den Verbindungspfaden zwischen Wechselrichter und Netztransformator ein mehrpoliger Schalter oder mehrere Schalter angeschlossen werden. Durch eine Steuerung der Schalter kann der Stromfluss zum Beispiel bei einem Erdschluss oder einem anderem Ereignis unterbrochen werden. Zweckmäßigerweise ist somit jeder Wechselrichter über Schalter, insbesondere einem Schütz, mit dem Transformator verbunden.

Es ist zu unterscheiden, ob die Wechselrichteranordnung ausgangsseitig einen Neutralleiter aufweist oder nicht. Bei nicht vorhandenem Neutralleiter wird vorzugsweise ein primärseitig im Dreieck verschalteter Transformator ohne Neutralleiter eingesetzt. Daher ist entweder eine Primärseite des Transformators in Stern geschaltet, wobei ein Mittelpunkt des Transformators mit einem Neutralleiter verbunden ist, oder alternativ eine Primärseite des Transformators in Dreieck geschaltet, wobei der Transformator ohne Neutralleiter ausgeführt ist. Bevorzugterweise sind die Wicklungen einer Sekundärseite des Transformators immer im Dreieck verschaltet.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine Darstellung einer ersten Ausführungsform eines erfindungsgemäßen Solarkraftwerkes, und
- Fig. 2: eine Darstellung einer zweiten Ausführungsform des erfindungsgemäßen Solarkraftwerkes.

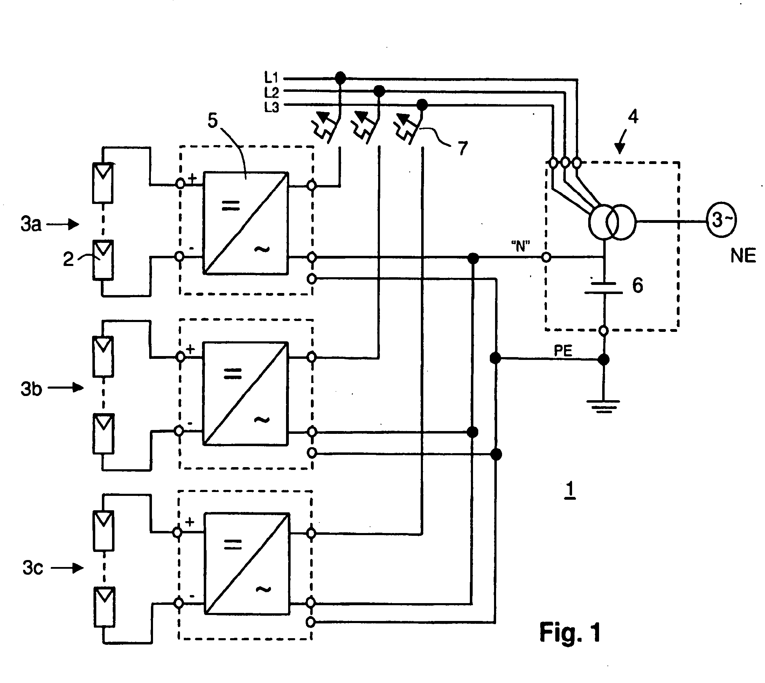

Fig. 1 zeigt eine erste Ausführungsform eines Solarkraftwerkes 1. Das Solarkraltwerk umfasst eine Vielzahl von Photovoltaikmodulen 2, insbesondere Dünnschichtmodule zur Erzeugung einer in ein mehrphasiges, insbesondere ein dreiphasiges Energieversorgungsnetz NE einzuspeisenden Energie. Es sind mehrere unterschiedlichen Phasen zugeordnete Photovoltaik-Strings 3a, 3b, 3c mit einer Primärseite eines Netztransformators 4 verbunden. Weiterhin sind mehrere Wechselrichter 5, insbesondere transformatorlose Wechselrichter zur Umwandlung der von den Photovoltaikmodulen generierten Gleichspannung in eine netzkonforme Netzwechselspannung vorhanden. Diese können Hochsetz- und/der Tiefsetzsteller, eine Brückenschaltung, eine Impulsweitensteuerung und/oder eine MPP-Regelung umfassen. Der Netztransformator 4 ist mit einem Neutralleiter N und einem Erdungsanschluss PE versehen.

Die drei einphasigen Wechselrichter 5 sind so angeordnet, dass in jede Phase des dreiphasigen Netz-Transformators 4 eingespeist wird. Pro Phase ist dann mindestens ein Wechselrichter 5 vorhanden.

Erfindungsgemäß ist zwischen einer der Phasen L1, L2 und L3 und Erde PE eine zusätzliche Gleichspannungsquelle 6 eingebracht, derart dass das Potential der Photovoltaik-Strings 3a, 3b, 3c verschoben wird und eine Vorspannung größer Null Volt bzw. von Null Volt verschieden eingestellt ist. Durch eine entsprechende Vorspannung des Netzmittelpunktes kann eine unipolare Vorspannung aller Photovoltaik-Zellen erreicht werden, und zwar auch dann, wenn ein transformatorloser Wechselrichter verwendet wird.

Bevorzugterweise ist im Strompfad der Gleichspannungsquelle eine Stromüberwachungseinrichtung zur Erkennung von Erdschlüssen angeschlossen. Bei einem Isolationsfehler oder einem Erdschluss kann dann ein Schütz 7 ausgelöst werden, der die Stromverbindung zwischen den Wechselrichtern 5 und dem Netztransformator 4 trennt. Möglich ist auch eine Trennung zwischen Netz NE und Transformator 4. Jeder Wechselrichter 5 ist also über Schalter mit dem Transformator 4 verbunden.

Bei dieser Variante ist die eine Primärseite des Transformators in Stern geschaltet, wobei ein Mittelpunkt des Transformators 4 mit dem Neutralleiter N verbunden ist.

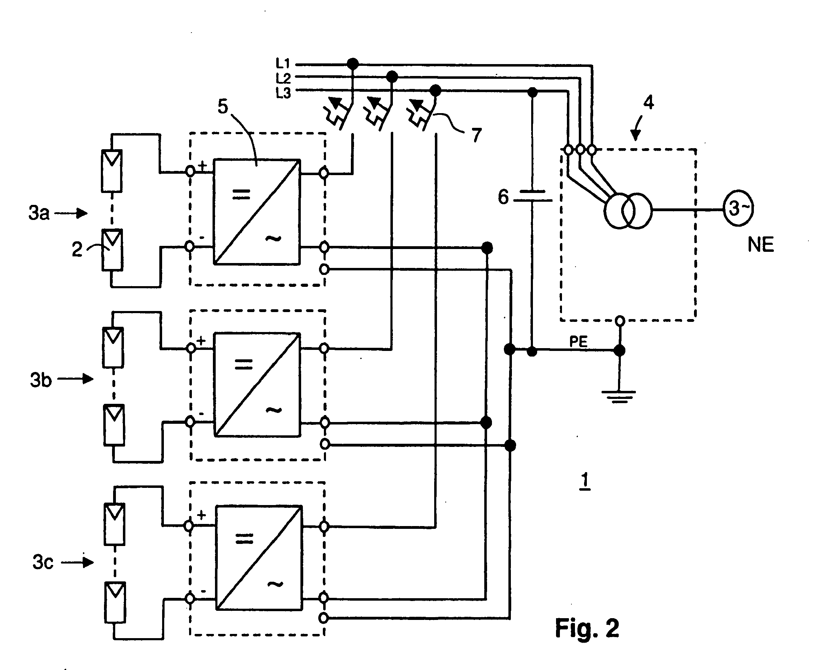

Möglich ist auch eine Variante, bei der der Transformator ohne Neutralleiter N ausgeführt ist, wie Fig. 2 veranschaulicht. Hierbei ist die eine Primärseite des Transformators in Dreieck geschaltet. Erfindungsgemäß ist dann zwischen einer der Phasen bzw. Leitern L1, L2, L3 und Erde PE die zusätzliche Gleichspannungsquelle eingebracht, derart dass das Potential der Photovoltaik-Strings verschoben wird und eine Vorspannung größer Null Volt eingestellt ist.

In beiden Varianten sind die Wicklungen der Sekundärseite des Transformators 4 im Dreieck verschaltet.
Möglich ist auch der Einsatz eines dreiphasigen Wechselrichters, bei dem seine Ausgänge WR mit den Leitern L1, L2, L3 über Schalter bzw. einem oder mehrere Schütze verbunden sind.

### Bezugszeichenliste

- 1: Solarkraftwerk
- 2: Photovoltaikmodule
- 3a, 3b, 3c: Photovoltaik-Strings
- 4: Netztransformator
- 5: Wechselrichter
- 6: Gleichspannungsquelle
- 7: Schütz
- L1, L2, L3: Leiter
- PE: Erde
- N: Neutralleiter
- NE: Netz

## Patentansprüche

1. Solarkraftwerk (1) mit einer Vielzahl von Photovoltaikmodulen (2) zur Erzeugung einer in ein mehrphasiges Energieversorgungsnetz einzuspeisenden Energie, wobei mehrere unterschiedlichen Phasen (L1, L2, L3) zugeordneten Photovoltaik-Strings (3a, 3b, 3c) mit einer Primärseite eines Netztransformators (4) verbunden sind und wenigstens ein Wechselrichter (5) zur Umwandlung der von den Photovoltaikmodulen (2) generierten Gleichspannung in eine netzkonforme Netzwechselspannung vorhanden sowie der Netztransformator (4) mit einem Neutralleiter (N) und einem Erdungsanschluss versehen ist,
**dadurch gekennzeichnet,**
**dass** zwischen dem Neutralleiter (N) und Erde (PE) eine zusätzliche Gleichspannungsquelle (6) eingebracht ist, derart dass das Potential der Photovoltaik-Strings (3a, 3b, 3c) verschoben wird und eine Vorspannung von Null Volt verschieden eingestellt ist.

2. Solarkraftwerk mit einer Vielzahl von Photovoltaikmodulen (2) zur Erzeugung einer in ein mehrphasiges Energieversorgungsnetz einzuspeisenden Energie, wobei mehrere unterschiedlichen Phasen (L1, L2, L3) zugeordneten Photovoltaik-Strings (3a, 3b, 3c) mit einer Primärseite eines Netztransformators (4) verbunden sind und wenigstens ein Wechselrichter (5) zur Umwandlung der von den Photovoltaikmodulen (2) generierten Gleichspannung in eine netzkonforme Netzwechselspannung vorhanden sowie der Netztransformator (4) mit einem Erdungsanschluss versehen ist,
**dadurch gekennzeichnet,**
**dass** zwischen einer der Phasen (L1, L2, L3) und Erde (PE) eine zusätzliche Gleichspannungsquelle (6) eingebracht ist, derart dass das Potential der Photovoltaik-Strings (3a, 3b, 3c) verschoben wird und eine Vorspannung von Null Volt verschieden eingestellt ist.

3. Solarkraftwerk nach Anspruch 1 oder 2,
**dadurch gekennzeichnet,**
**dass** eine Stromüberwachungseinrichtung der zusätzlichen Gleichspannungsquelle (6) zur Erkennung von Erdschlüssen angeschlossen ist.

4. Solarkraftwerk nach einem der vorhergehenden Ansprüche,
**dadurch gekennzeichnet,**
**dass** die Photovoltaikmodule (2) als Dünnschichtmodule ausgeführt sind.

5. Solarkraftwerk nach einem der vorhergehenden Ansprüche,
**dadurch gekennzeichnet,**
**dass** jeder Wechselrichter (5) als transformatorloser Wechselrichter ausgeführt ist.

6. Solarkraftwrerk nach einem der vorhergehenden Ansprüche,
**dadurch gekennzeichnet,**
**dass** für jede Phase ein Wechselrichter (5) eingesetzt wird.

7. Solarkraftwerk nach einem der vorhergehenden Ansprüche,
**dadurch gekennzeichnet,**
**dass** jeder Wechselrichter (5) über Schalter mit dem Transformator (4) verbunden ist.

8. Solarkraftwerk nach Anspruch 7,
**dadurch gekennzeichnet,**
**dass** als Schalter mindestens ein Schütz (7) eingesetzt wird.

9. Solarkraftwerk nach einem der vorhergehenden Ansprüche,
**dadurch gekennzeichnet,**
**dass** eine Primärseite des Transformators (4) in Stern geschaltet ist, wobei ein Mittelpunkt des Transformators (4) mit einem Neutralleiter (N) verbunden ist.

10. Solarkraftwerk nach einem der vorhergehenden Ansprüche,
**dadurch gekennzeichnet,**
**dass** eine Primärseite des Transformators (4) in Dreieck geschaltet ist, wobei der Transformator (4) ohne Neutralleiter (N) ausgeführt ist.

11. Solarkraftwerk nach einem der vorhergehenden Ansprüche,
**dadurch gekennzeichnet,**
**dass** Wicklungen einer Sekundärseite des Transformators (4) im Dreieck verschaltet sind.

## Claims

1. A solar power plant (1) with a plurality of photovoltaic modules (2) for generating a power to be fed in a multi-phase grid, several photovoltaic strings (3a, 3b, 3c), which are allocated to different phases (L1, L2, L3), being connected to a primary side of a mains transformer (4) and at least one inverter (5) for converting the direct voltage generated by the photovoltaic modules (2) into an alternating mains voltage conforming to the grid being provided and said mains transformer (4) being provided with a neutral conductor (N) and with a grounded terminal,
**characterized in**
**that** an additional direct voltage source (6) is inserted between the neutral conductor (N) and ground (PE) in such a manner that the potential of the photovoltaic strings (3a, 3b, 3c) is displaced and that a bias voltage is set, which is different from zero volt.

2. A solar power plant with a plurality of photovoltaic modules (2) for generating a power to be fed in a multi-phase grid, several photovoltaic strings (3a, 3b, 3c), which are allocated to different phases (L1, L2, L3), being connected to a primary side of a mains transformer (4) and at least one inverter (5) for converting the direct voltage generated by the photovoltaic modules (2) into an alternating mains voltage conforming to the grid being provided and said mains transformer (4) being provided with a grounded terminal,
**characterized in**
**that** an additional direct voltage source (6) is inserted between one of the phases (L1, L2, L3) and ground (PE) in such a manner that the potential of the photovoltaic strings (3a, 3b, 3c) is displaced and that a bias voltage is set, which is different from zero volt.

3. The solar power plant as set forth in claim 1 or 2,
whereby a current monitoring device of the additional direct voltage source (6) for detecting ground faults is connected.

4. The solar power plant as set forth in any one of the previous claims, whereby the photovoltaic modules (2) are configured to be thin-film modules.

5. The solar power plant as set forth in any one of the previous claims, whereby each inverter (5) is implemented as a transformerless inverter.

6. The solar power plant as set forth in any one of the previous claims, whereby an inverter (5) is utilized for each phase.

7. The solar power plant as set forth in any one of the previous claims, whereby each inverter (5) is connected to the transformer (4) via switches.

8. The solar power plant as set forth in claim 7,
whereby at least one contactor (7) is utilized as the switch.

9. The solar power plant as set forth in any one of the previous claims, whereby a primary side of the transformer (4) is star-connected, a midpoint of the transformer (4) being connected to a neutral conductor (N).

10. The solar power plant as set forth in any one of the previous claims, whereby a primary side of the transformer (4) has a triangular connection, the transformer (4) being implemented without neutral conductor (N).

11. The solar power plant as set forth in any one of the previous claims, whereby windings of a secondary side of the transformer (4) have a triangular connection.

## Revendications

1. Centrale solaire (1) avec une pluralité de modules photovoltaïques (2), destinée à générer une énergie destinée à alimenter un réseau de distribution d'énergie polyphasé, plusieurs chaînes photovoltaïques (3a, 3b, 3c) associées à des phases (L1, L2, L3) différentes étant reliées à un côté primaire d'un transformateur de distribution (4) et au moins un onduleur (5) destiné à convertir la tension directe générée par les modules photovoltaïques (2) en une tension alternative du réseau conforme au réseau étant prévu et le transformateur de distribution (4) étant pourvu d'un conducteur neutre (N) et d'une prise de mise à la terre,
**caractérisée en ce**
**qu'**une source de tension directe (6) supplémentaire est insérée entre le conducteur neutre (N) et la terre (PE), de sorte que le potentiel des chaînes photovoltaïques (3a, 3b, 3c) est déplacé et qu'une polarisation différente de zéro volt est réglée.

2. Centrale solaire avec une pluralité de modules photovoltaïques (2) destinée à générer une énergie destinée à alimenter un réseau de distribution d'énergie multi-phase, plusieurs chaînes photovoltaïques (3a, 3b, 3c) associées à des phases (L1, L2, L3) différentes étant reliées à un côté primaire d'un transformateur de distribution (4) et au moins un onduleur (5) destiné à convertir la tension directe générée par les modules photovoltaïques (2) en une tension alternative du réseau conforme au réseau étant prévu et le transformateur de distribution (4) étant pourvu d'une prise de mise à la terre,
**caractérisée en ce**
**qu'**une source de tension directe (6) supplémentaire est insérée entre l'une des phases (L1, L2, L3) et la terre (PE), de sorte que le potentiel des chaînes photovoltaïques (3a, 3b, 3c) est déplacé et qu'une polarisation différente de zéro volt est réglée.

3. Centrale solaire selon les revendications 1 ou 2,
**caractérisée en ce**
**qu'**un système de surveillance du courant est raccordé à la source supplémentaire de tension directe (6) afin de reconnaître les fuites à la terre.

4. Centrale solaire selon l'une quelconque des revendications précédentes,
**caractérisée en ce**
**que** les modules photovoltaïques (2) sont réalisés sous forme de modules à couche mince.

5. Centrale solaire selon l'une quelconque des revendications précédentes,
**caractérisée en ce**
**que** chaque onduleur (5) est réalisé sous forme d'onduleur sans transformateur.

6. Centrale solaire selon l'une quelconque des revendications précédentes,
**caractérisée en ce**
**qu'**un onduleur (5) est utilisé pour chaque phase.

7. Centrale solaire selon l'une quelconque des revendications précédentes,
**caractérisée en ce**
**que** chaque onduleur (5) est relié au transformateur (4) par l'intermédiaire de commutateurs.

8. Centrale solaire selon la revendication 7,
**caractérisée en ce**
**qu'**au moins un contacteur (7) est utilisé comme commutateur.

9. Centrale solaire selon l'une quelconque des revendications précédentes,
**caractérisée en ce**
**qu'**un côté primaire du transformateur (4) est monté en étoile, un point central du transformateur (4) étant relié à un conducteur neutre (N).

10. Centrale solaire selon l'une quelconque des revendications précédentes,
**caractérisée en ce**
**qu'**un côté primaire du transformateur (4) est monté en triangle, le transformateur (4) étant réalisé sans conducteur neutre (N).

11. Centrale solaire selon l'une quelconque des revendications précédentes,
**caractérisée en ce**
**que** des bobinages d'un côté secondaire du transformateur (4) sont connectés en triangle.
